# EUROPEAN PATENT SPECIFICATION

(11) **EP 2 376 809 B1**
(45) Date of publication and mention of the grant of the patent: **13.11.2013**
(21) Application number: 09771602.1
(22) Date of filing: 11.12.2009
(51) Int. Cl.: F16H 55/56

(54) **ADJUSTABLE PULLEY FOR A CONTINUOUSLY VARIABLE TRANSMISSION, AND METHOD FOR THE ASSEMBLY THEREOF**
VERSTELLBARE RIEMENSCHEIBE FÜR STUFENLOSES GETRIEBE UND VERFAHREN ZU DEREN ZUSAMMENBAU
POULIE REGLABLE POUR UNE TRANSMISSION VARIABLE EN CONTINU ET SON PROCEDE DE MONTAGE

(30) Priority: 12.12.2008 NL 2002325
(43) Date of publication of application: 19.10.2011
(73) Proprietor: Robert Bosch GmbH, 70442 Stuttgart (DE)
(72) Inventor: VAN SPIJK, Johannes Gerardus Ludovicus Maria, 6621 BK Dreumel (NL)
(74) Representative: Plevier, Gabriel Anton Johan Maria
(86) International application number: PCT/NL2009/000250
(87) International publication number: WO 2010/068091

(56) References cited:
- EP-A- 0 846 895
- DE-A1- 3 721 692
- DE-A1- 3 836 576
- DE-A1-102008 014 241
- GB-A- 1 428 092
- US-A- 4 149 425
- US-A- 6 012 998
- US-A1- 2004 063 527

## Description

The invention relates to an adjustable pulley, in particular for a continuously variable transmission or CVT, provided with two sheaves having a central opening into which an axle of the pulley is inserted, a first sheave of which is fixedly connected to the pulley axle and a second sheave of which is displaceable in the axial direction along the pulley axle by means of the operating means of the pulley.

A pulley of this type is, for example known from US patent no. 6,012,998 and is especially used in CVTs of passenger motor vehicles in particular. In a continuously variable transmission, two pulleys are used having a drive belt between them, which drive belt is clamped between the two sheaves of the two pulleys during operation by in each case moving, that is to say, at least pushing, said second or displaceable sheave in the axial direction towards said first or fixed sheave by means of the operating means. The clamping forces exerted on the drive belt by the respective operating means via the sheaves in this case determine the radial positions of the drive belt between these sheaves of the two pulleys and thus for the transmission ratio of the CVT. At the same time, said clamping forces determine the maximum torque which can be transmitted between the two pulleys, that is to say determine the maximum frictional force which can be exerted between the drive belt and the sheaves of a respective pulley.

In general, the automotive industry aims for low production costs. In the case of the CVT, the pulleys in particular are relatively complex and heavily dimensioned components which thus to a large degree determine the cost price of the overall CVT.

The invention relates to a new pulley construction which can advantageously be produced less expensively than the constructions which are currently known. More particularly, a number of components of the pulley according to the invention can be produced and/or assembled in a simpler manner than was previously possible. In a particularly advantageous embodiment of the pulley according to the invention, the latter even has fewer components than the known pulley.

According to the invention, the axial cross section of the central opening of the fixed pulley sheave is non-circular and the pulley axle is provided with an axial cross section which is substantially identical in shape thereto, at least where the fixed sheave is situated on the axle, and the fixed sheave is fitted on the axle by a force fit. Preferably, the central opening of the fixed sheave follows a regular polygon having four or more rounded corners and having at least slightly convexly curved sides in between. Such a shape can be produced relatively easily and results in an optimum form-fit and force fit between the sheave and the axle. The assembly of the fixed sheave and the axle takes place either by
- first heating the fixed sheave and/or cooling the axle, by then inserting the axle into the central opening of the fixed sheave, and finally by bringing the two components to the same and/or ambient temperature, or by
- firstly applying a lubricant to the wall of the central opening of the fixed sheave and/or to the periphery of the axle and by then pushing the axle through the central opening of the fixed sheave.

This latter assembly technique is particularly simple and can thus be carried out inexpensively and is therefore in principle preferred.

With the known pulley, the (axially) displaceable sheave is fixedly (non-rotatably) connected to the axle by means of a key/groove connection in the tangential or peripheral direction so that the torque can be transmitted between them. It should be noted that the "key of the known key/groove connection is usually provided as a separate component or components, for example in the shape of a cylindrical pin or a number of (bearing) balls. However, according to the invention, it is possible in a particularly advantageous way to produce said non-rotatable connection between the displaceable sheave and the axle by also providing the central opening of this displaceable sheave with a non-circular axial cross section which is indeed greater than, but is preferably substantially identical in shape to the central opening of the fixed sheave. Obviously, the axle has to have an axial cross section at the location of the displaceable sheave which is smaller than, but substantially identical in shape to the opening of the displaceable sheave and thus preferably substantially identical in shape to the opening of the fixed sheave. The assembly of the displaceable and fixed pulley sheaves and the pulley axle is effected in a simple manner by inserting the axle into the opening of the displaceable sheave.

It is known to provide the pulley axle with a gear wheel for the purpose of, for example, transmitting the torque to (a gear wheel of) an output shaft of the transmission. In order to make it possible to produce and/or assemble the known pulley, this gear wheel is always provided as a separate component on the axle and non-rotatably connected thereto by means of a key/groove connection. However, according to the invention, it is advantageously possible, in combination with the above-described method for the assembly of the displaceable and fixed pulley sheaves and the pulley axle to integrally form the gear wheel with the axle on a first side or end thereof. The respective other side or end of the pulley axle is in this case provided with the non-circular axial cross section and it is this end which is inserted and/or pushed into the central opening of the displaceable and fixed pulley sheaves in the desired sequence.

The invention will be explained with reference to the attached figures, in which:
Fig. 1 diagrammatically shows a cross section of the continuously variable transmission with two adjustable pulleys according to the prior art;
Fig. 2 diagrammatically shows a cross section of a primary pulley according to the prior art;
Fig. 3 diagrammatically shows a cross section of a first exemplary embodiment of the adjustable pulley according to the invention at the location of the fixed sheave thereof and oriented in the axial direction;
Fig. 4 diagrammatically shows a cross section of the first exemplary embodiment of the adjustable pulley according to the invention at the location of displaceable sheave thereof and oriented in the axial direction; and
Fig. 5 diagrammatically shows a cross section of a second exemplary embodiment of the adjustable pulley according to the invention.

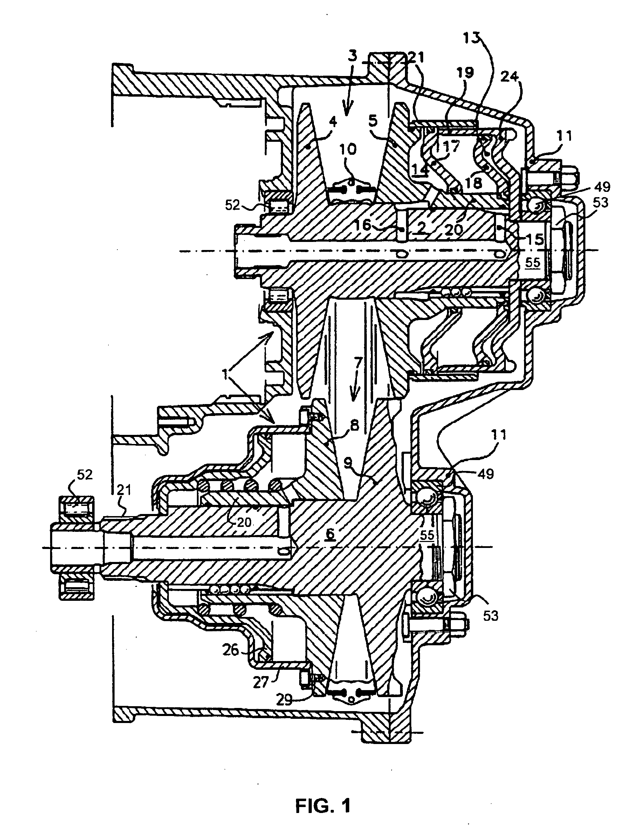

The continuously variable transmission 1 according to the prior art shown diagrammatically and in cross section in Fig. 1 is provided, in a transmission housing 11 thereof, with a so-called primary adjustable pulley 3 and a so-called secondary adjustable pulley 7. The pulleys 3, 7 each comprise two sheaves 4, 5; 8, 9 which are fitted on a primary axle 2 and a secondary axle 6, respectively. One sheave 5; 8 of each pulley 3; 7 is axially displaceable, as a result of which the radial position of the drive belt 10 between the pulleys 3 and 7 can be modified and the transmission ratio can be adjusted, while the respective other fixed sheave 4; 9 is fixedly connected to the respective axle 2; 6, both axially and tangentially.

Each of the displaceable sheaves 5 and 8 is provided with the operating means of the respective pulley 3, 4 in the form of a piston/cylinder assembly, with the displaceable sheave 8 of the secondary pulley 4 being provided with a single piston/cylinder assembly 26, 27 and with the displaceable sheave 5 of the primary pulley 3 being provided with a double piston/cylinder assembly. The double piston/cylinder assembly of the primary pulley 3 comprises two cylinder chambers 13, 14. A first cylinder chamber 13 is enclosed by the cylinder 19, the piston 18, the radial wall 24 and the axle 2. A second cylinder chamber 14 is enclosed by the cylinder 21, the piston 17, the sheave 5 and the sleeve 20 of the primary axle 2 on which the displaceable sheave 5 is fitted. By means of the bores 15 and 16, fluid can be introduced into and removed from said cylinder chambers 13, 14 and/or the volume thereof can be increased or decreased, with the displaceable sheave 5 with the sleeve 20 being displaced in the axial direction along the primary axle 2.

The axles 2, 6 are mounted in the transmission housing 11 with in each case two bearings 49, 52 per axle 2; 6, at least one bearing 49 of which is attached to the respective axle 2 or 6 by means of a nut 53 on an axial end 55 of said axle 2 or 6.

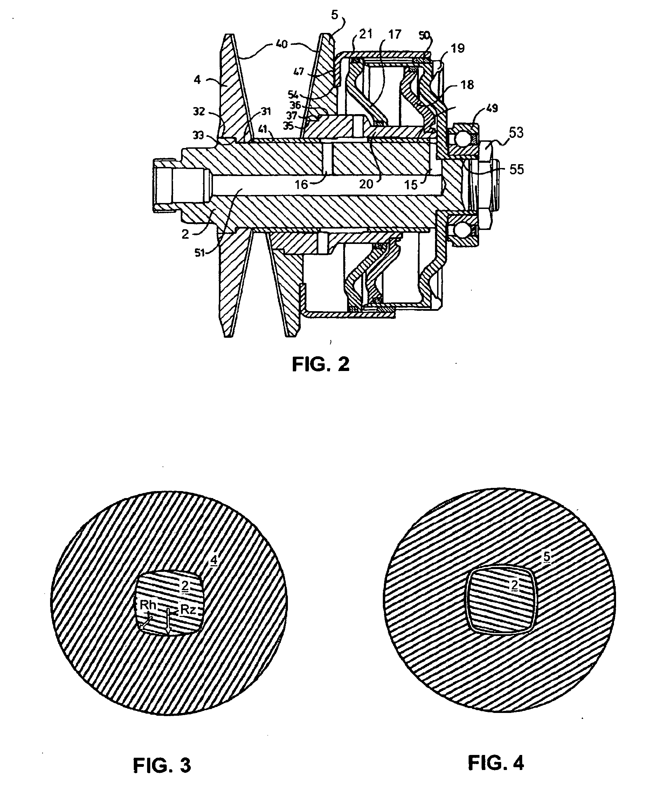

The primary pulley 3 known from US-6,012,998 is illustrated in Fig. 2 in cross section. The fixed sheave 4 of the primary pulley 3 is arranged on the axle 2 thereof as a separate component. In the axial direction, the fixed sheave 4 is placed against steps 33 and is thus fixed in said direction. The steps 33 are formed by the stepwise increase in the (outer) diameter of the axle 2. In the tangential direction, the fixed sheave 4 is fixed on the axle 2 either by an adhesive or by means of a key/groove connection. US-6,012,998 and EP 0 846 895 disclose a pulley having the features of the preamble of claim 1.

According to the invention, the fixed sheave 4 is by contrast fixed on the axle 2 by means of at least one polygonal force fit, as is diagrammatically illustrated in Fig. 3 by means of the axial cross section of the primary pulley 3 at the location of the fixed sheave 4 thereof. The force fit fixes the fixed sheave 4 in the axial and in the tangential direction, in which latter direction the form-fit between the periphery of the central opening of the fixed sheave 4 and of the axle 2 which deviates from a circle ensures the mutual fixation thereof. According to the invention, measured in the radial direction, the periphery of the (unloaded/separate) axle 2 in this case has an oversize in the range from 0.005 mm to 0.050 mm compared to the periphery of the central opening of the (unloaded/separate) fixed sheave 4. Preferably, the radial oversize in the radial direction is in this case less than 0.025 mm and, for example, has a value between 0.015 mm and 0.020 mm. Such a small radial oversize, the attendant small degree to which the material has to be pressed and the unexpectedly low internal stresses during operation appear to have become possible by said additional tangential fixation of the form-fit between the fixed sheave 4 and the axle 2. However, if it is to be avoided that a gap can open between the fixed sheave 4 and the axle 2 during operation, for example in order to prevent crevice corrosion or fretting corrosion, the radial oversize according to the invention has to be greater than 0.025 mm, preferably greater than 0.035 mm.

Apart from said radial oversize, the axial cross sections of the axle 2 and of the central opening of the fixed sheave 4 are substantially identical in shape and in this case substantially form a quadrangle having rounded corners and convex sides. According to the invention, said corners at least approximately form an arc of a circle, the radius Rh of which is between 1 mm and 10 mm and said sides at least approximately form an arc of a circle, the radius Rz of which is greater than 10 mm and is preferably between 50 mm and 100 mm. It should be noted here that the polygonal shapes generally used in the art for such a form-fit have a continuously variable radius of curvature, in which case the abovementioned arcs and radii are only approximations.

According to the invention, it is particularly advantageous to provide the edges of the central opening of the fixed sheave 4 with a small bevel or rounding. It has been found that this reduces the contact stresses which occur during operation between the fixed sheave 4 and the axle 2 by a factor of 3 to 4. In one preferred embodiment, said bevel or rounding of a dimension provided in the axial direction is 0.5 to 2.5 mm and is preferably formed by an arc of a circle having a radius of 10 to 50 mm and merges smoothly with the contour of said central opening. According to the invention, the displaceable sheave 5 is preferably also fixed on the axle 2 by means of a polygonal form-fit, at least only in the tangential direction, as is diagrammatically illustrated in Fig. 4 by means of an axial cross section of the primary pulley 3 at the location of the displaceable sheave 4 thereof. In this case, some clearance is left between the periphery of the axle 2 and the periphery of the central opening of the displaceable sheave 5 which, measured in the radial direction, in any case has to be smaller than 0.050 mm and is preferably smaller than 0.025 mm, more particularly has a value between 0.010 mm and 0.020 mm. Such a radial clearance is relatively difficult to produce, but is necessary according to the invention in order to be able to use the pulley in the CVT, where possible tilting of the displaceable sheave 5 with respect to the axle 2 has to be minimal.

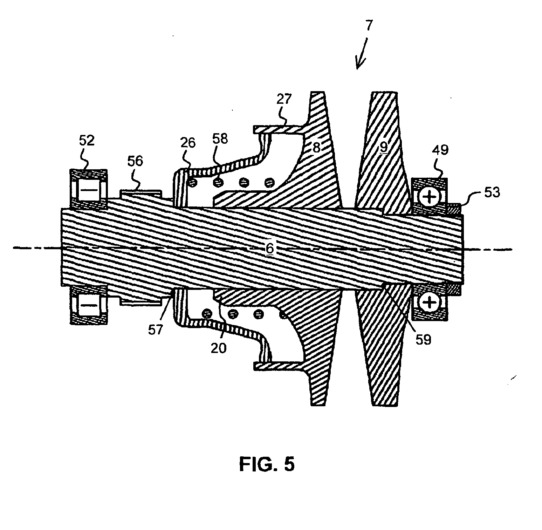

Apart from said radial clearance, the axial cross sections of the axle 2 and of the central opening of the displaceable sheave 5 are substantially identical in shape and in this case substantially form a quadrangle having rounded corners and convex curved sides. According to the invention, said corners form at least substantially an arc of a circle, the radius Rh of which is between 1 mm and 10 mm and said sides form at least substantially an arc of a circle, the radius Rz of which is greater than 10 mm and preferably is between 50 mm and 100 mm. Fig. 5 diagrammatically shows a second exemplary embodiment of the adjustable pulley 7 according to the invention viewed in the radial direction and in cross section. This is the secondary pulley 7, the axle 6 of which is (at least in this example) on its left-hand side provided with a gear wheel 56 which is integrally formed therewith. In the assembly of the pulley 7, the two pulley sheaves 8, 9 are therefore successively moved and/or pushed over said gear wheel 56 from the right-hand end of the axle 6. More particularly, the piston 26 of the piston/cylinder assembly 26, 27 of the secondary pulley 7 is moved over the axle 7 before the sheaves 8, 9, which piston 26 is clamped in the respective cylinder 27 between a first step 57 of the axle 7 and a spring 58 provided for this purpose.

In the exemplary embodiment illustrated in Fig. 5, both the central opening of the fixed sheave 9 and the axle 7 are provided at the location of said fixed sheave 9 with a second step 59 which forms a mechanical stop in the axial direction for the fixed sheave 9 and, together with the bearing 49, locks the latter in the axial direction, so that said force fit between the axle 7 and the fixed sheave 7 is also relieved in said direction and/or ensures mutual fixation.

## Claims

1. Adjustable pulley (3; 7), in particular for a continuously variable transmission, comprising two sheaves (4, 5; 8, 9) having a central opening into which an axle (2; 6) of the pulley (3; 7) is inserted, whereof a first or fixed sheave (4; 9) is fixedly connected to the axle (2; 6) by a force fit and whereof a second or displaceable sheave (5; 8) is displaceable in the axial direction along the axle (2; 6) by means of the operating means (17, 18, 19, 21; 26, 27, 58) of the pulley (3; 7) with a clearance being provided between the displaceable sheave (5; 8) and the axle (2; 6), **characterized in that**, the central openings of the fixed sheave (4; 9) and of the displaceable sheave (5, 8), at least in an axial cross section thereof, are non-circular and substantially identical in shape, and **in that** the axial cross section of the axle (2; 6) at the locations of the fixed sheave (4; 9) and of the displaceable sheave (5; 8) is substantially identical in shape to the non-circular axial cross section of the central openings of the fixed sheave (4; 9) and of the displaceable sheave (5, 8).

2. Adjustable pulley (3; 7) according to Claim 1, **characterized in that** said force fit is achieved by the periphery of the axle (2; 6) having an oversize in the radial direction compared to the periphery of the central opening of the fixed sheave (4; 9) of a magnitude in the range from 0.005 mm to 0.050 mm, preferably in the range from 0.015 mm to 0.025 mm.

3. Adjustable pulley (3; 7) according to Claim 1 or 2, **characterized in that** the central opening of the fixed sheave (4; 9) is a regular polygon.

4. Adjustable pulley (3; 7) according to Claim 3, **characterized in that** the central opening of the fixed sheave (4; 9) has four rounded corners with at least slightly convexly curved sides in between.

5. Adjustable pulley (3; 7) according to Claim 4, **characterized in that** said corners are curved in accordance with a radius of curvature (Rh) having a magnitude in the range from 1 mm to 10 mm, and **in that** said sides are curved in accordance with a radius of curvature (Rz) having a magnitude greater than 10 mm, preferably in the range from 50 mm to 100 mm.

6. Adjustable pulley (3; 7) according to one or more of the preceding claims, **characterized in that** the edges of the central opening of the fixed sheave (4; 9) are provided with a bevel or rounding.

7. Adjustable pulley (3; 7) according to Claim 6, **characterized in that** the edges of the central opening of the fixed sheave (4; 9) are provided with a rounding, which rounding is formed by an arc of a circle having a radius between 10 mm and 50 mm and having an axial dimension of between 0.5 mm and 2.5 mm, which arc of a circle merges smoothly with the contour of said central opening.

8. Adjustable pulley (3; 7) according to one or more of the preceding claims, **characterized in that** the clearance provided between the displaceable sheave (5; 8) and the axle (2; 6) in the radial direction is smaller than 0.050 mm and preferably has a value in the range from 0.010 mm to 0.025 mm.

9. Adjustable pulley (7) according to one or more of the preceding claims, **characterized in that** the axle (6) comprises a gear wheel (56) which is integrally formed therewith.

10. Adjustable pulley (7) according to Claim 9, **characterized in that** the operating means (26, 27, 58) comprise a piston (26) placed around the axle (6), which piston (26) is clamped between a step (57) on the periphery of the axle (7) and a spring (58) provided in a cylinder (27) of the respective operating means (26, 27, 58).

## Patentansprüche

1. Verstellbare Riemenscheibe (3; 7), insbesondere für ein stufenloses Getriebe, umfassend zwei Seilscheiben (4, 5; 8, 9) mit einer mittleren Öffnung, in die eine Achse (2; 6) der Riemenscheibe (3; 7) eingeführt ist, von denen eine erste oder feststehende Seilscheibe (4; 9) durch Presspassung mit der Achse (2; 6) fest verbunden ist und von denen eine zweite oder verschiebbare Seilscheibe (5; 8) durch die Betätigungsmittel (17, 18, 19, 21; 26, 27, 58) der Riemenscheibe (3; 7) in der Axialrichtung entlang der Achse (2; 6) verschiebbar ist, wobei zwischen der verschiebbaren Seilscheibe (5; 8) und der Achse (2; 6) ein Abstand vorgesehen ist, **dadurch gekennzeichnet, dass** die mittleren Öffnungen der feststehenden Seilscheibe (4; 9) und der verschiebbaren Seilscheibe (5; 8) zumindest in einem axialen Querschnitt davon nichtkreisförmig sind und im Wesentlich eine identische Form aufweisen und dass der axiale Querschnitt der Achse (2; 6) an den Stellen der feststehenden Seilscheibe (4; 9) und der verschiebbaren Seilscheibe (5; 8) eine im Wesentlichen identische Form zu der des nichtkreisförmigen axialen Querschnitts der mittleren Öffnungen der feststehenden Seilscheibe (4; 9) und der verschiebbaren Seilscheibe (5; 8) aufweist.

2. Verstellbare Riemenscheibe (3; 7) nach Anspruch 1, **dadurch gekennzeichnet, dass** die Presspassung dadurch erzielt wird, dass der Umfang der Achse (2; 6) in der Radialrichtung im Vergleich zum Umfang der mittleren Öffnung der feststehenden Seilscheibe (4; 9) ein Übermaß in einer Größenordnung im Bereich von 0,005 mm bis 0,050 mm, vorzugsweise im Bereich von 0,015 mm bis 0,025 mm, aufweist.

3. Verstellbare Riemenscheibe (3; 7) nach Anspruch 1 oder 2, **dadurch gekennzeichnet, dass** die mittlere Öffnung der feststehenden Seilscheibe (4; 9) ein regelmäßiges Polygon ist.

4. Verstellbare Riemenscheibe (3; 7) nach Anspruch 3, **dadurch gekennzeichnet, dass** die mittlere Öffnung der feststehenden Seilscheibe (4; 9) vier abgerundete Ecken mit zumindest etwas konvex gekrümmten Seiten dazwischen aufweist.

5. Verstellbare Riemenscheibe (3; 7) nach Anspruch 4, **dadurch gekennzeichnet, dass** die Ecken gemäß einem Krümmungsradius (Rh) mit einer Größenordnung im Bereich von 1 mm bis 10 mm gekrümmt sind und dass die Seiten gemäß einem Krümmungsradius (Rz) mit einer Größenordnung von größer als 10 mm, bevorzugt im Bereich von 50 mm bis 100 mm, gekrümmt sind.

6. Verstellbare Riemenscheibe (3; 7) nach einem oder mehreren der vorhergehenden Ansprüche, **dadurch gekennzeichnet, dass** die Ränder der mittleren Öffnung der feststehenden Seilscheibe (4; 9) mit einer Abschrägung oder Rundung versehen sind.

7. Verstellbare Riemenscheibe (3; 7) nach Anspruch 6, **dadurch gekennzeichnet, dass** die Ränder der mittleren Öffnung der feststehenden Seilscheibe (4; 9) mit einer Rundung versehen sind, wobei die Rundung durch einen Kreisbogen mit einem Radius zwischen 10 mm und 50 mm und einer Axialabmessung zwischen 0,5 mm und 2,5 mm gebildet ist, wobei der Kreisbogen fließend in die Kontur der mittleren Öffnung übergeht.

8. Verstellbare Riemenscheibe (3; 7) nach einem oder mehreren der vorhergehenden Ansprüche, **dadurch gekennzeichnet, dass** der zwischen der verschiebbaren Seilscheibe (5; 8) und der Achse (2; 6) vorgesehene Abstand in der Radialrichtung kleiner als 0,050 mm ist und vorzugsweise einen Wert im Bereich von 0,010 mm bis 0,025 mm aufweist.

9. Verstellbare Riemenscheibe (7) nach einem oder mehreren der vorhergehenden Ansprüche, **dadurch gekennzeichnet, dass** die Achse (6) ein damit einstückig ausgebildetes Zahnrad (56) umfasst.

10. Verstellbare Riemenscheibe (7) nach Anspruch 9, **dadurch gekennzeichnet, dass** die Betätigungsmittel (26, 27, 58) einen um die Achse (6) herum angeordneten Kolben (26) umfassen, der zwischen einem Absatz (57) im Umfang der Achse (6) und einer in einem Zylinder (27) des jeweiligen Betätigungsmittels (26, 27, 58) vorgesehenen Feder (58) festgeklemmt ist.

## Revendications

1. Poulie réglable (3 ; 7), en particulier pour une transmission variable en continu, comprenant deux disques (4, 5 ; 8, 9) comportant une ouverture centrale dans laquelle un axe (2 ; 6) de la poulie (3 ; 7) est inséré, parmi lesquels un premier disque ou disque fixe (4 ; 9) est raccordé de manière fixe à l'axe (2 ; 6) par un ajustement à force et un second disque ou disque déplaçable (5 ; 8) est déplaçable dans la direction axiale le long de l'axe (2 ; 6) par le biais des moyens d'actionnement (17, 18, 19, 21 ; 26, 27, 58) de la poulie (3 ; 7), un espace étant prévu entre le disque déplaçable (5 ; 8) et l'axe (2 ; 6), **caractérisée en ce que** les ouvertures centrales du disque fixe (4 ; 9) et du disque déplaçable (5 ; 8), au moins dans une section transversale axiale de celles-ci, sont non circulaires et sensiblement de forme identique, et **en ce que** la section transversale axiale de l'axe (2 ; 6) aux emplacements du disque fixe (4 ; 9) et du disque déplaçable (5 ; 8) présente une forme sensiblement identique à celle de la section transversale axiale non circulaire des ouvertures centrales du disque fixe (4 ; 9) et du disque déplaçable (5 ; 8).

2. Poulie réglable (3 ; 7) selon la revendication 1, **caractérisée en ce que** ledit ajustement à force est obtenu grâce au fait que la périphérie de l'axe (2 ; 6) est surdimensionnée dans la direction radiale par comparaison à la périphérie de l'ouverture centrale du disque fixe (4 ; 9) selon un ordre de grandeur dans la plage de 0,005 mm à 0,050 mm, de préférence dans la plage de 0,015 mm à 0,025 mm.

3. Poulie réglable (3 ; 7) selon la revendication 1 ou 2, **caractérisée en ce que** l'ouverture centrale du disque fixe (4 ; 9) est un polygone régulier.

4. Poulie réglable (3 ; 7) selon la revendication 3, **caractérisée en ce que** l'ouverture centrale du disque fixe (4 ; 9) comporte quatre coins arrondis avec, entre eux, des côtés incurvés de manière au moins légèrement convexe.

5. Poulie réglable (3 ; 7) selon la revendication 4, **caractérisée en ce que** lesdits coins sont incurvés selon un rayon de courbure (Rh) d'un ordre de grandeur dans la plage de 1 mm à 10 mm, et **en ce que** lesdits côtés sont incurvés selon un rayon de courbure (Rz) d'un ordre de grandeur supérieur à 10 mm, de préférence dans la plage de 50 mm à 100 mm.

6. Poulie réglable (3 ; 7) selon une ou plusieurs des revendications précédentes, **caractérisée en ce que** les bords de l'ouverture centrale du disque fixe (4 ; 9) sont dotés d'un biseau ou d'un arrondi.

7. Poulie réglable (3 ; 7) selon la revendication 6, **caractérisée en ce que** les bords de l'ouverture centrale du disque fixe (4 ; 9) sont dotés d'un arrondi, ledit arrondi étant formé par un arc de cercle ayant un rayon mesurant entre 10 mm et 50 mm et ayant une dimension axiale mesurant entre 0,5 mm et 2,5 mm, ledit arc de cercle s'intégrant au contour de ladite ouverture centrale de manière homogène.

8. Poulie réglable (3 ; 7) selon une ou plusieurs des revendications précédentes, **caractérisée en ce que** l'espace prévu entre le disque déplaçable (5 ; 8) et l'axe (2 ; 6) dans la direction radiale est inférieur à 0,050 mm et de préférence présente une valeur comprise dans la plage allant de 0,010 mm à 0,025 mm.

9. Poulie réglable (7) selon une ou plusieurs des revendications précédentes, **caractérisée en ce que** l'axe (6) comprend une roue dentée (56) formée d'un seul tenant avec celui-ci.

10. Poulie réglable (7) selon la revendication 9, **caractérisée en ce que** les moyens d'actionnement (26, 27, 58) comprennent un piston (26) placé autour de l'axe (6), ledit piston (26) étant serré entre un épaulement (57) sur la périphérie de l'axe (6) et un ressort (58) situé dans un cylindre (27) des moyens d'actionnement (26, 27, 58) respectifs.
